# FASCICULE DE BREVET EUROPEEN

(11) **EP 2 181 629 B1**
(45) Date de publication et mention de la délivrance du brevet: **21.12.2011**
(21) Numéro de dépôt: 10001828.2
(22) Date de dépôt: 21.06.2004
(51) Int. Cl.: A47J 31/36

(54) **Extraction d'une capsule**
Extraktion einer Kapsel
Extraction of a capsule

(30) Priorité: 10.07.2003 EP 03015776
(43) Date de publication de la demande: 05.05.2010
(62) Demande divisionnaire de: 09007962.5
(73) Titulaire: Nestec S.A., 1800 Vevey (CH)
(72) Inventeur: Ryser, Antoine, 1006 Lausanne (CH); Boussemart, Christophe S., 74500 Lugrin (FR); Denisart, Jean-Luc, 1096 Cully (CH); Cahen, Antoine, 1005 Lausanne (CH)
(74) Mandataire: Schnyder, Frank Simon

(56) Documents cités:
- EP-A- 1 219 217
- WO-A-03/073897
- US-A- 5 755 149
- US-A- 5 776 527

## Description

La présente invention concerne l'extraction d'une capsule dans un dispositif d'extraction ainsi que l'utilisation d'une telle capsule à cette fin et l'utilisation de café rôti moulu, de café soluble, de cacao soluble, de lait, de thé, de substances déshydratées pour bouillons ainsi que toutes combinaisons de ces produits comme contenu d'une telle capsule pour le procédé d'extraction.

Il existe déjà sur le marché des dispositifs d'extraction de capsules. Il existe un besoin de proposer un dispositif d'extraction qui facilite l'insertion et le positionnement de la capsule dans le dispositif mais qui soit à la fois simple et peu coûteux.

Un problème rencontré est le positionnement de la capsule dans le dispositif et la fermeture de celui-ci autour de la capsule pour réaliser l'extraction. La capsule doit être généralement positionnée par l'utilisateur sur un support de capsule ou dans un logement, puis le dispositif est refermé manuellement ou automatiquement autour de la capsule. Il est important de correctement positionner la capsule de sorte que le dispositif se referme correctement autour de celle-ci et qu'une bonne étanchéité soit ainsi réalisée pour garantir de bonnes conditions d'extraction. Un mauvais positionnement peut endommager la capsule; et ainsi affecter les conditions d'extraction. Le chargement de la capsule doit aussi être facile, sans tâtonnement quant à la position correcte de la capsule dans le dispositif. Le chargement doit aussi être aussi rapide que possible et ne pas nécessiter de manipulations excessives.

Il existe ainsi des dispositifs qui proposent l'introduction de la capsule dans un plan vertical et le déplacement des parties d'extraction ou d'infusion selon un plan horizontal autour de la capsule. De tels systèmes ont pour avantages de permettre un chargement par le haut à la façon d'une tirelire, et rend le chargement rapide. Le positionnement de la capsule est ensuite pris en charge par le déplacement d'une partie mobile qui repousse la capsule contre une autre partie telle qu'un chauffe-eau. Toutefois, ces dispositifs sont complexes à réaliser et ne s'adaptent pas à des machines à café peu coûteuses et donc d'entrée de gamme pour le marché grand public. Ils sont donc généralement destinés pour le marché des professionnels comme la restauration, les bars ou les collectivités. Par exemple, la demande de brevet WO 98/47418 concerne un dispositif pour l'extraction de pastilles pré-dosées, dans lequel les pastilles sont introduites verticalement et sont extraites horizontalement. L'inconvénient de ce dispositif est qu'il comprend deux parties mobiles pour l'extraction, ce qui rend le principe mécanique plus compliqué.

Le brevet US 5,776,527 se rapporte à un dispositif pour l'infusion de capsules filtres lenticulaires comprenant des moyens de guidage et de retenue sous forme de butées mobiles qui sont repoussées par un piston mobile horizontalement vers un chauffe-eau. Les butées reviennent en position sous l'effet d'un ressort pour décoller la capsule qui ensuite tombe sous l'effet de la gravité lorsque les butées sont actionnées en rotation pour s'ouvrir vers le bas. Un tel dispositif met en oeuvre plusieurs mouvements combinés des moyens de guidage et de retenue de la capsule. Cela rend le dispositif complexe et cher à réaliser.

La demande de brevet EP 1 219 217 A1 se rapporte à une machine à café comprenant un siège de capsule qui oscille entre une position de réception de la capsule et une position de libération de la capsule. Le siège est repoussé contre le système d'injection d'eau au moyen d'un piston qui se déplace horizontalement lorsque le siège est en position verticale. De part la configuration oscillante du siège et le respect de trois positions de référence de celui-ci, et du nombre de pièces nécessaires, un tel dispositif est complexe et coûteux à réaliser.

Le but de la présente invention est de mettre à disposition du consommateur un système d'extraction qui soit de conception plus simple, moins coûteux et mécaniquement fiable. Un des objets est de faciliter l'insertion d'une capsule dans un dispositif pour l'extraction de cette capsule; en particulier, de permettre l'insertion et le positionnement d'une capsule dans un dispositif d'extraction sans tâtonnement, ni manipulations excessives et sans risque de mauvais positionnement de la capsule dans ledit dispositif. Un autre objet est de limiter le nombre de pièces nécessaires, en particulier, le nombre de pièces mobiles du dispositif de façon à réduire sa complexité et son coût de production.

La présente invention concerne un procédé d'extraction d'une capsule dans un dispositif d'extraction selon la revendication 1. L'invention concerne également l'utilisation d'une capsule selon la revendication 13. De plus, l'invention concerne l'utilisation de café rôti moulu, de café soluble, de cacao soluble, de lait, de thé, de substances déshydratées pour bouillons ainsi que toutes combinaisons de ces produits selon la revendication 14.

Dans un mode d'exécution, le dispositif pour l'extraction d'une capsule comprenant
une première partie,
une seconde partie qui est mobile relativement à la première partie,
un logement pour la capsule et définissant en position de fermeture de la seconde partie mobile contre la première partie une position d'extraction de la capsule selon un axe dans ledit logement,
une partie d'introduction et de positionnement de la capsule arrangée de façon à insérer la capsule par gravité et positionner ladite capsule dans une position intermédiaire,
un système d'écoulement de boisson, dans lequel la seconde partie mobile est configurée pour déplacer la capsule de la position intermédiaire dans la position d'extraction lors de la fermeture du dispositif.

Les capsules que l'on peut extraire avec le dispositif selon l'invention sont de tout type, par exemple des capsules ouvertes, du type capsules en papier filtre ou aussi les capsules rigides ou semi-rigides de forme cylindrique ou de tronc de cône faisant l'objet des brevets au nom de la demanderesse, à savoir EP 512'148 et EP 602'203. Dans un mode préférentiel, la capsule est asymétrique et comprend un bord de guidage lequel est pris en charge par les moyens de guidage du dispositif. Ainsi, une capsule asymétrique selon un bord de guidage permet de faire basculer la capsule légèrement par rapport à l'axe d'extraction. Un tel basculement a pour avantage de pouvoir agir sur la capsule lors de son rétablissement dans l'axe d'extraction comme il sera expliqué ci-après. Toutefois, le dispositif selon l'invention peut aussi fonctionner avec des capsules symétriques.

Les capsules peuvent contenir tout type de produit alimentaire soluble ou extractible, par exemple du café rôti et moulu, du café soluble, du cacao soluble, du lait, du thé, des substances déshydratées pour bouillons et autres ainsi que toute combinaisons de ces produits.

Pour des raisons de simplicité, le dispositif de l'invention comprend préférablement une première partie qui est fixe et une seconde partie qui est mobile relativement à la première partie. Cependant, il n'est pas exclu de prévoir une première partie et une seconde partie qui soient toutes les deux mobiles.

En fait, le dispositif selon l'invention permet de faire passer la capsule depuis une position intermédiaire à une position d'extraction : elle est retenue dans sa position intermédiaire, elle passe dans sa position d'extraction et lorsque la seconde partie mobile est ouverte après l'extraction, la capsule est dégagée naturellement sous le simple effet de la gravitation. Elle tombe dans un tiroir ou tout autre moyen de récupération de capsule usagée et le consommateur est prêt pour recharger le dispositif.

De préférence, le dispositif comprend des moyens d'arrêt de la capsule. Ces moyens d'arrêt sont configurés pour retenir la capsule en position intermédiaire lorsque la capsule est introduite dans la partie d'introduction et de positionnement. Ces moyens d'arrêt retiennent la capsule selon un axe décalé ou incliné par rapport à l'axe de la capsule en position d'extraction dans le logement. La position d'extraction correspond à la position dans laquelle la partie mobile est refermée contre la partie fixe en renfermant la capsule.

On peut noter que le logement peut être ménagé dans la partie mobile ou la partie fixe ou encore être partagé à la fois dans la partie fixe et la partie mobile.

Pour passer de la position intermédiaire à la position d'extraction, il existe ainsi au moins deux solutions.

Une première solution consiste à maintenir la capsule en position intermédiaire de manière décalée par rapport à l'axe de la capsule en position d'extraction; par exemple, de façon à ce que la partie mobile dans son mouvement agisse sur la capsule pour la descendre et la pousser selon l'axe de ladite partie mobile dans sa position d'extraction. La capsule peut être décalée selon son axe de recentrage (ou axe d'extraction), par exemple parallèle à celui-ci, ou être inclinée par rapport à son axe de recentrage d'un certain angle, de préférence un angle faible inférieur à 30 degrés. Une telle solution permet d'éviter toute complexité mécanique et utilise un minimum de pièces mobiles. En effet, la capsule peut être simplement maintenue en position intermédiaire par des moyens d'arrêt statiques et c'est la partie mobile qui se charge de déplacer la capsule lors de son déplacement vers la partie fixe et vient alors la positionner en position d'extraction.

Dans un premier mode de réalisation préférentiel, la partie mobile est ainsi configurée pour forcer le passage de la capsule au delà des moyens d'arrêt lors du passage de la capsule de sa position intermédiaire à sa position d'extraction. Ainsi, lorsque que la partie mobile entraîne la capsule; celle-ci étant positionnée selon un axe décalé ou incliné, la capsule est rétablie de force dans l'axe de déplacement de la partie mobile correspondant à l'axe de la capsule en position d'extraction; ce qui force la capsule à passer au delà des moyens d'arrêts. Une fois les moyens d'arrêts passés par la capsule; celle-ci est mise en position d'extraction par l'une des parties au moins se refermant contre l'autre et appliquant la capsule contre la partie d'extraction. Une fois la réouverture des deux parties, la capsule n'est plus maintenue par les moyens d'arrêt et est donc libérable. On comprend qu'une telle configuration apporte plus de simplicité et de fiabilité par rapport aux systèmes connus.

Une seconde possibilité est que la partie mobile pousse simplement la capsule dans son axe de déplacement dans sa position d'extraction.

Ainsi, le dispositif comprend des moyens d'arrêt configurés pour retenir la capsule en position intermédiaire selon un axe sensiblement coaxial avec l'axe du logement. Dans un mode préférentiel de réalisation, la partie mobile agit sur l'ouverture des moyens d'arrêt pour les écarter lors du passage de la capsule de sa position intermédiaire à sa position d'extraction.

La partie fixe comporte un corps de guidage pour le mouvement en translation de la partie mobile vers la partie fixe. Le corps de guidage peut, par exemple, être orienté sensiblement horizontalement pour guider la partie mobile selon un mouvement horizontal. Ce corps de guidage est constitué par exemple d' au moins deux rails, de préférence 4 rails de guidage. Le dispositif selon l'invention permet une extraction par injection d'eau horizontale. La partie mobile est de préférence sensiblement cylindrique.

Dans le dispositif selon l'invention, la partie d'introduction et de positionnement de la capsule est disposée devant et perpendiculairement au corps de guidage et comprend au moins un moyen de guidage. De préférence, elle comprend deux moyens de guidage. Ces moyens peuvent être de toute sorte, par exemple, dans le cas de l'extraction d'une capsule selon le brevet EP 512'148, il s'agit de glissières d'introduction permettant l'engagement de la collerette de la capsule.

Pour maintenir la capsule en position intermédiaire, dans une première forme de réalisation, les moyens de guidage comprennent au moins un moyen d'arrêt disposé au même niveau de façon à retenir la capsule dans ladite position intermédiaire. De préférence, les moyens de guidage comprennent deux moyens d'arrêt. Ces moyens peuvent être de toute sorte, par exemple des bossages d'arrêt, de hauteur juste suffisante pour bloquer la capsule. Les bossages coopèrent avec un bord de la capsule, comme une collerette, par exemple. Les bossages retiennent ainsi la capsule par appui de la collerette sur ces bossages. Le passage de la position d'appui à la position de libération peut se faire en forçant le passage de la collerette au delà des bossages; ceux-ci pouvant être fixes ou élastiquement rétractables.

Dans une autre forme de réalisation du dispositif selon l'invention, les moyens de guidage sont pivotants et forment ou comprennent des moyens d'arrêt agencés pour bloquer la capsule en position intermédiaire lorsque la partie mobile est en position d'ouverture et pour débloquer la capsule lorsque la partie mobile est en position de fermeture. Ces moyens de guidage sont actionnés en position de blocage et de déblocage par un levier actionneur, monté à rotation et disposé à l'extérieur de la partie mobile : ce levier , par le déplacement de la partie mobile, met les moyens de guidage en position de blocage ou de déblocage.

Dans une dernière forme de réalisation du dispositif selon l'invention, celui-ci comprend devant le corps de guidage une butée escamotable, disposée sous la partie mobile. Cette butée escamotable est aussi actionnée par le déplacement de la partie mobile : elle permet de maintenir la capsule en position lorsque la partie mobile est en position d'ouverture.

Le dispositif comprend en outre une plaque d'extraction vers laquelle la partie mobile déplace la capsule en position d'extraction. la capsule comprend généralement une face d'extraction laquelle est mise en contact, ou tout au moins, est rapprochée suffisamment, de la plaque d'extraction lors de la fermeture du dispositif. Si on extrait une capsule en papier filtre, cette plaque est une simple plaque percée de trous pour laisser passer le liquide d'extraction. Si la capsule est une capsule selon les deux brevets mentionnés ci-dessus, comme par exemple une capsule ayant une face destinée à se déchirer sous la montée en pression dans la capsule, il s'agit d'une plaque comprenant soit des pyramides ou soit des pointes comme mentionnées dans les brevets EP 512'142 et EP 604'615.

La partie mobile est mue par des moyens assurant le déplacement en position d'ouverture et de fermeture. Ces moyens peuvent prendre différentes formes. On utilise de préférence des moyens simples sur le plan mécanique, comme des systèmes à transmission par bielles combinées avec un système de blocage de type genouillère. Toute autre solution donnant un mouvement sensiblement linéaire est également possible, par exemple des systèmes hydrauliques, électriques ou mécaniques, par exemple à vis.

Comme déjà mentionné ci-dessus, en fin d'extraction, l'ouverture de la partie mobile permet la chute par gravitation de la capsule.

Le fonctionnement du dispositif dans la première forme de réalisation est le suivant : le consommateur introduit une capsule par la glissière d'introduction. la capsule est guidée, par exemple, par un bord périphérique formant une collerette qui s'insère dans ladite glissière. Les moyens d'arrêt bloquent la capsule en position intermédiaire; en particulier, son bord périphérique est retenu par les moyens d'arrêt. Le consommateur agit sur les moyens permettant la fermeture de la partie mobile, de sorte que la partie mobile prend la capsule dans son logement et abaisse l'axe de la capsule pour l'amener dans l'axe de déplacement du corps mobile, ce qui a pour effet que la collerette de la capsule passe sur le ou les moyens d'arrêt et se positionne en position d'extraction en dessous de ces moyens d'arrêt. L'extraction a lieu et lorsque l'on ouvre la partie mobile, la capsule tombe par gravitation parce qu'elle n'est plus retenue par les moyens d'arrêt.

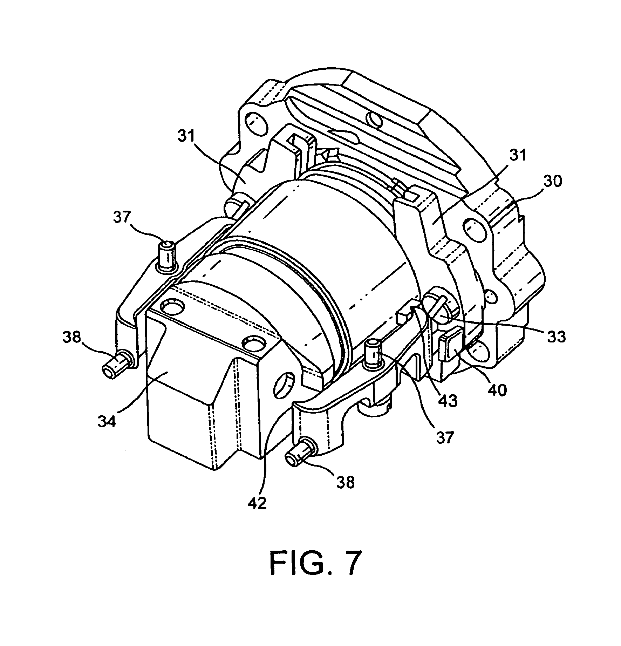

Les figures 7 à 13 ci-dessous montrent le fonctionnement dans les autres modes de réalisation.

Le dispositif selon l'invention est intégré dans une machine à café ou autre système d'extraction comprenant par ailleurs un réservoir d'eau, un conduit d'eau, une pompe pour le déplacement de l'eau, des moyens de chauffage de l'eau et une arrivée d'eau dans la partie mobile et tout autre élément normalement présent dans une machine à café ou autre système d'extraction. Par autre système d'extraction, on entend des systèmes d'extraction multi-boissons, espresso et autres.

L'invention se rapporte aussi à une machine à café comprenant le dispositif ainsi décrit La machine comprend, par ailleurs, un réservoir d'eau, un conduit d'eau, une pompe pour le déplacement de l'eau, des moyens de chauffage de l'eau et une arrivée d'eau dans la partie mobile du dispositif de l'invention.

La suite de la description est faite en relation avec les dessins, selon lesquels:
Fig. 1 est une vue en perspective du dispositif selon l'invention en position ouverte,
Fig. 2 est la même vue que celle de la figure 1, sans le corps de guidage pour mieux comprendre le déplacement de la partie mobile,
Fig. 3 est une vue en perspective du dispositif selon l'invention en position fermée,
Fig. 4 est une vue de côté en position fermée,
Fig. 5 est une vue dans l'axe A de positionnement de la capsule en position intermédiaire et
Fig. 6 est la même vue que celle da la figure 5 avec la capsule en position d'extraction,
Fig. 7 est une vue en perspective selon un second mode de réalisation, avec la partie mobile en position fermée,
Fig. 8 est une vue en perspective selon la figure précédente , avec la partie mobile en position ouverte,
Fig. 9 et 10 sont des vues dans l'axe de la plaque d'extraction,
Fig. 11 à 13 sont des vues schématiques du dispositif selon l'invention dans une dernière forme de réalisation.

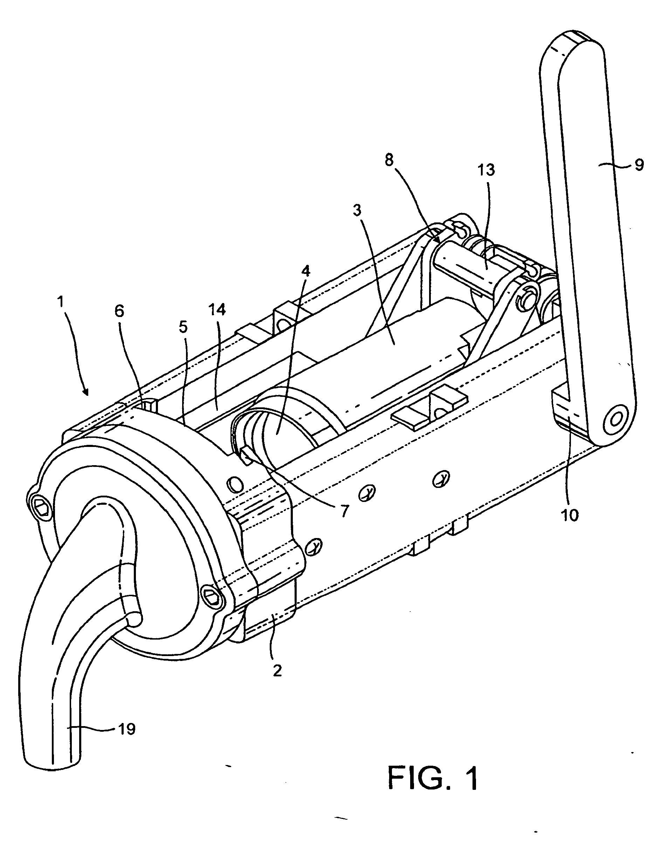

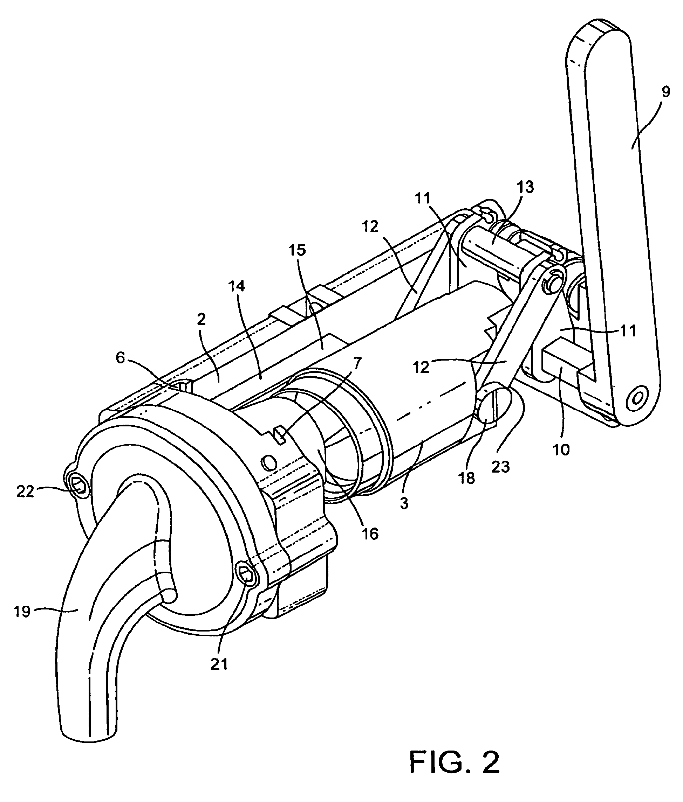

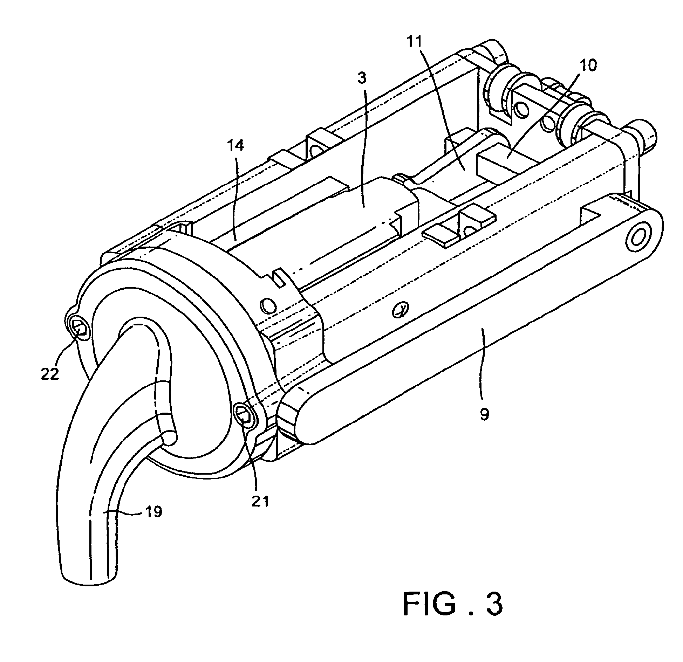

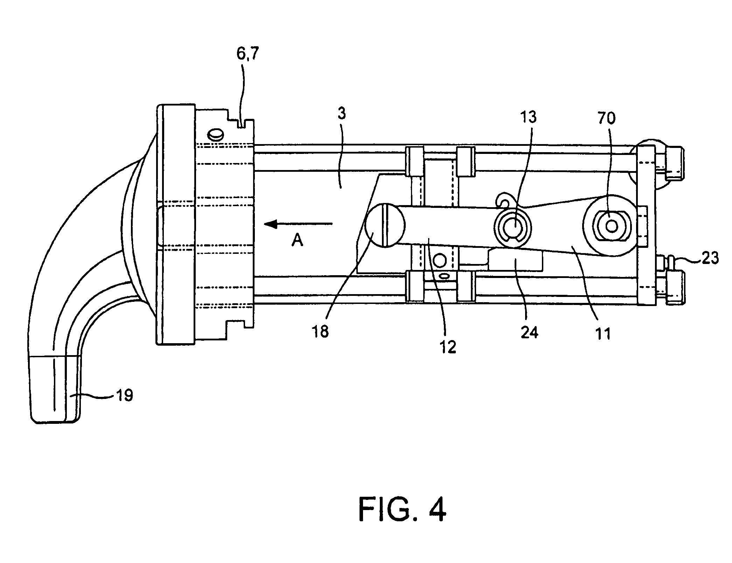

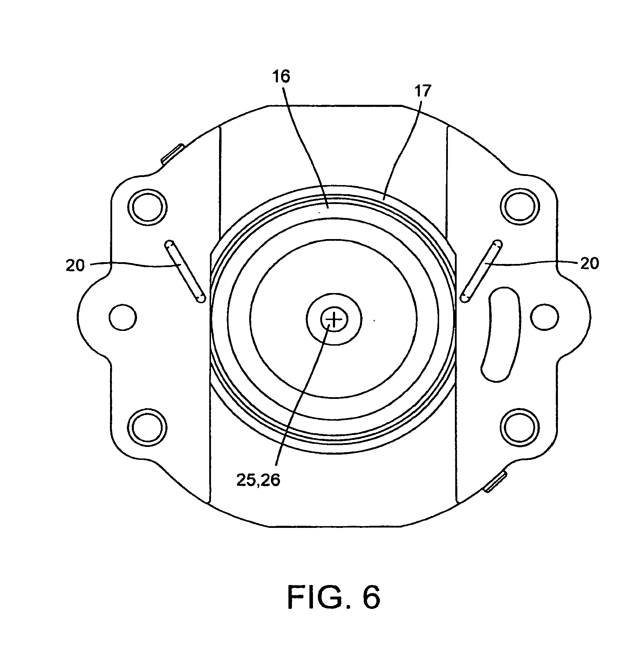

En référence aux figures 1 à 6, le dispositif d'extraction 1 comprend une partie 2 fixe et une partie 3 mobile. La partie 3 comprend un logement 4 pour la capsule à extraire. La partie d'introduction et de positionnement de la capsule 16 comprend deux moyens de guidage 6,7, dans lesquels coulisse la capsule pour la positionner. La capsule peut ainsi être munie d'une collerette laquelle glisse au travers des moyens de guidage. La capsule est retenue en position décalée par rapport à l'axe 25 de déplacement de la partie mobile. Comme la capsule est asymétrique par rapport à sa collerette, la capsule s'incline aussi légèrement du fait de son centre de gravité décalé par rapport à la collerette. Ce décalage favorise la prise en charge de la capsule par le logement de la partie mobile lors de son déplacement. La partie mobile 3 est mue par des moyens 8 assurant sa fermeture et son ouverture. Ces moyens sont constitués par un système à genouillère comprenant un bras de levier 9 solidaire d'un arbre d'entraînement 10. Cet arbre est solidaire de deux paires de biellettes respectivement 11 et 12. Les biellettes 11 et 12 sont jointes selon un axe des biellettes 13. Les biellettes 12 sont solidaires par un système de vis 18 du corps mobile 3. Le corps mobile 3 mu par le système à genouillère glisse dans un corps de guidage 14 constitué par quatre rails 15. Lorsqu'on ferme le système à genouillère, l'axe 13 des biellettes est arrêté dans son mouvement par la butée 24. La capsule 16 est prévue pour aller se plaquer contre une plaque d'extraction 17 au moment de l'extraction de ladite capsule. La boisson s'écoule par le système d'écoulement 19 dans une tasse non représentée. Le dispositif selon l'invention comprend finalement dans les moyens de guidage 6,7 deux moyens d'arrêt identiques 20 permettant de maintenir la capsule en position intermédiaire. Les vis 21,22 permettent de solidariser le système d'écoulement de la plaque d'extraction. Il est prévu une arrivée d'eau 23 sur l'arrière du corps mobile.

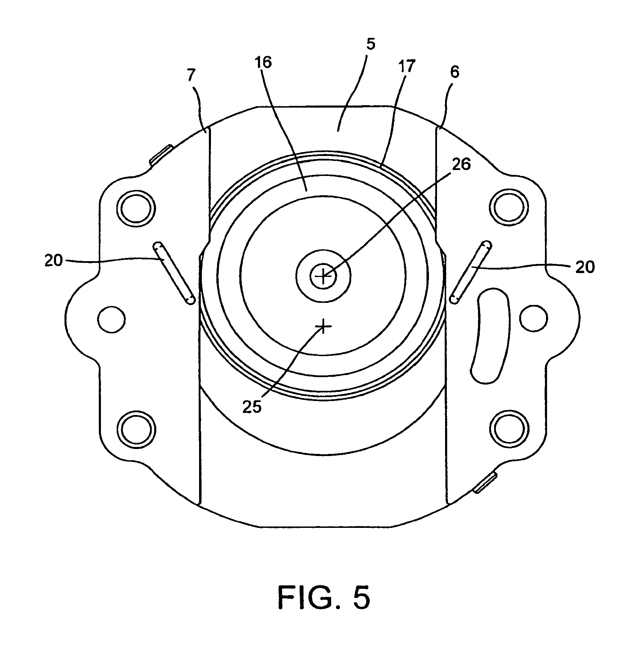

Le dispositif selon l'invention fonctionne de la manière suivante : Le consommateur introduit la capsule 16 par les glissières d'introduction 6,7. La capsule glisse jusqu'à atteindre les moyens d'arrêt 20 : la collerette de la capsule appuie contre ces moyens et la capsule est en position intermédiaire, comme on le voit bien aussi sur la figure 5 : l'axe de la capsule est matérialisé par la référence 26 et l'axe du corps mobile par la référence 25. La capsule étant asymétrique par rapport au plan passant par sa collerette, l'axe de la capsule a tendance à s'incliner légèrement par rapport à l'axe de déplacement de la partie mobile. Le consommateur agit ensuite sur le levier 9 , ce qui déplace par le système à bielles le corps mobile 3. Ce corps mobile se déplace selon son axe 25 : lors de ce mouvement il fait entrer dans son logement 4 la capsule 16, ce qui a pour effet de descendre l'axe 26 de la capsule vers l'axe 25 du corps mobile. La conséquence est que la collerette de la capsule passe en dessous des moyens d'arrêt 20. Le consommateur donne ensuite ordre pour amener l'eau chaude par le conduit 23 dans le corps mobile : l'eau traverse la capsule, par la montée en pression, la capsule s'ouvre contre la plaque d'extraction et le café coule par la sortie 19 dans une tasse disposée en dessous. Lorsqu'on arrive à la fin de l'extraction, le consommateur soulève le levier 9, ce qui met en mouvement le corps mobile vers l'arrière , libère la capsule qui n'est plus retenue et qui tombe ainsi dans un système de récupération de capsules usagées. Le dispositif est alors prêt pour l'extraction suivante.

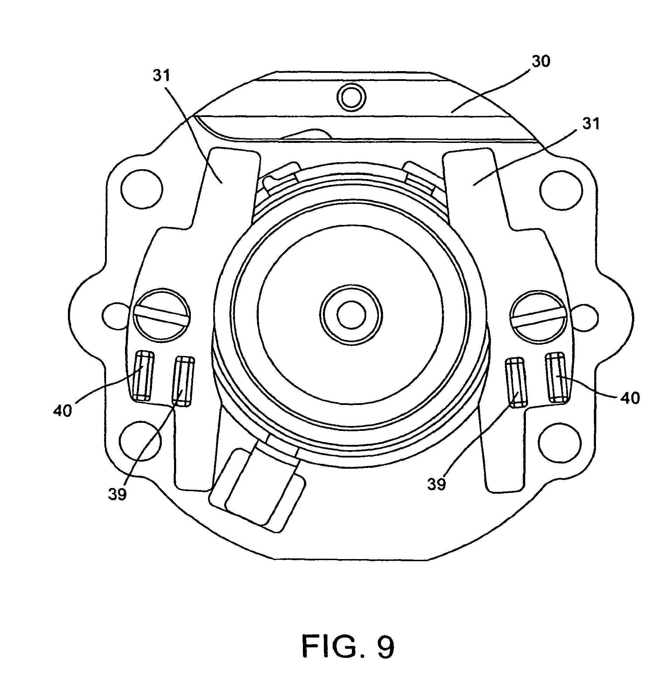

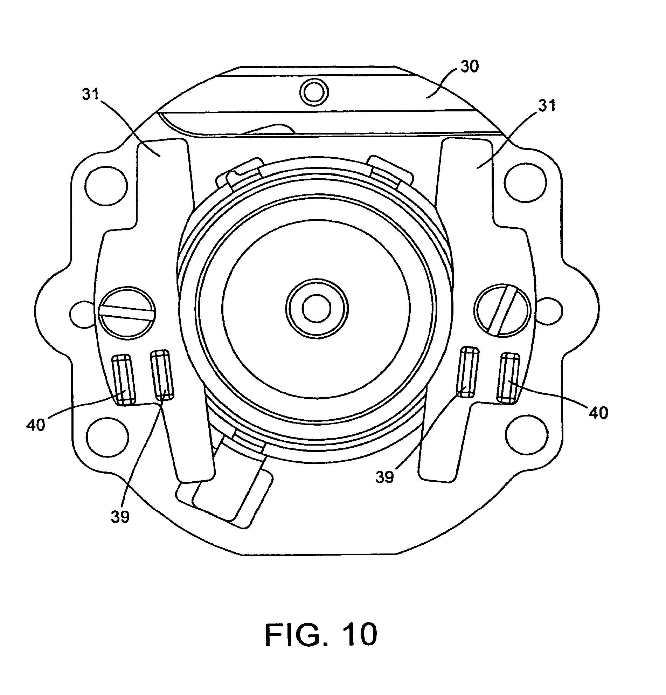

En référence aux figures 7 à 10, le dispositif selon l'invention est plus représenté par rapport aux moyens de guidage et de blocage de la capsule, que par rapport à la partie mobile et aux moyens de mouvement de ladite partie mobile. La plaque d'extraction 30 comprend comme moyen de guidage 31 de la capsule 32 deux éléments pivotants autour d'un axe 33. Chaque élément pivotant comprend deux butées de positionnement, l'une intérieure 39, l'autre extérieure 40, mieux représentées sur les figures 9 et 10. La partie mobile 34 comprend un logement 35 pour la capsule et de chaque côté un bossage 41 . Les moyens pour déplacer la partie mobile ne sont pas représentés. Des deux côtés de la partie mobile, on a disposé un levier actionneur 36, tournant selon l'axe 37 et comportant un doigt de déplacement 38 du moyen de guidage 31 et deux zones d'action avant 42 et arrière 43 dudit levier actionneur 36.

Le fonctionnement est le suivait

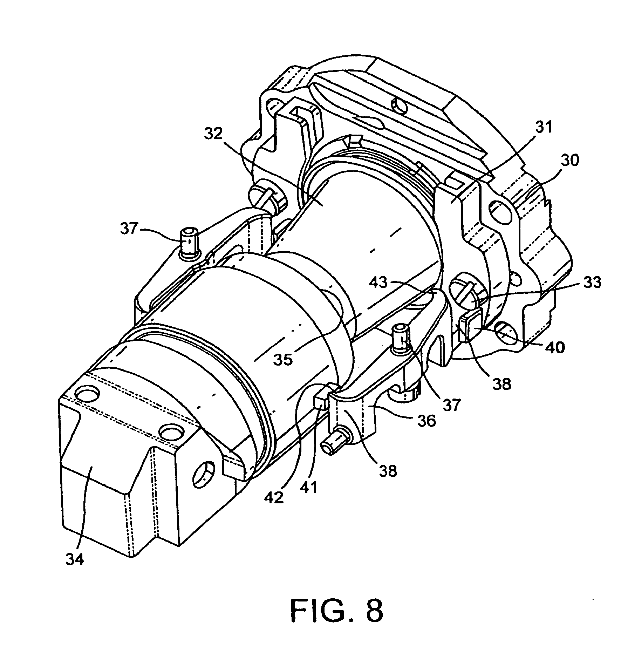

En position ouverte, à savoir selon la figure 8, le doigt de déplacement 38 du levier actionneur 36 maintient le moyen de guidage pivotant 31 en position de retenue de la capsule 32 (figure 10), car ledit doigt agit sur la butée intérieure 39 de l'élément pivotant 31. Lorsque la partie mobile 34 se déplace vers la plaque d'extraction 30, le bossage 41 libère la zone d'action avant 42 et va se positionner vers la zone d'action arrière 43, de sorte que le doigt de déplacement 38 pousse la butée de positionnement extérieure 40 vers l'extérieur. Ce qui a pour conséquence que le moyen de guidage pivotant s'écarte, ce qui signifie qu'au moment de l'ouverture de la partie mobile, la capsule n'aura plus aucune retenue.

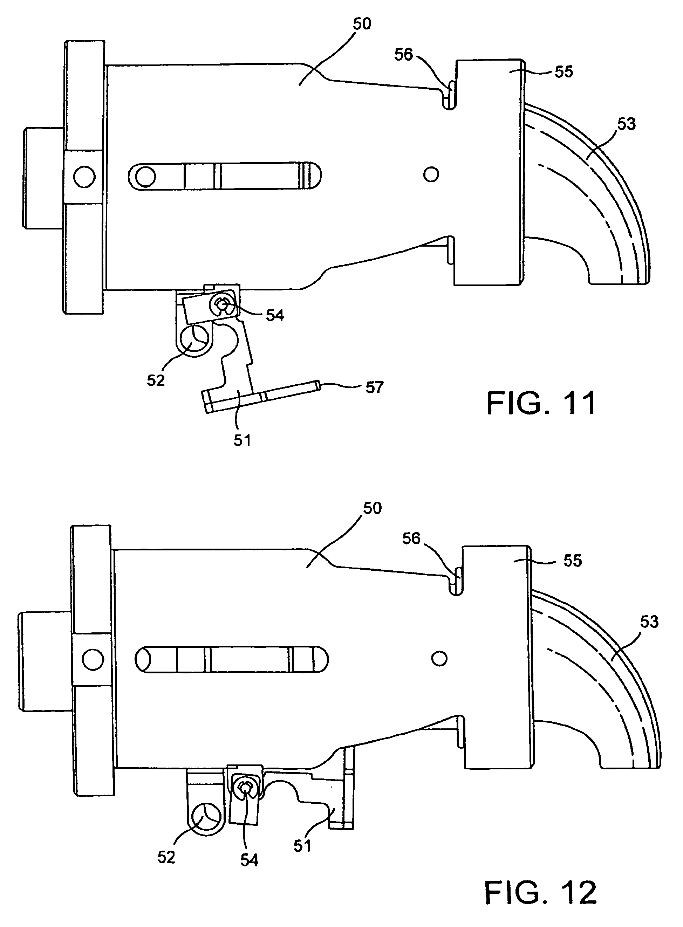

Les figures 11 à 13 donnent un autre mode de réalisation du blocage de la capsule. La partie fixe 50 comprend une plaque d'extraction 55 et un système d'écoulement de boisson 53. Sous l'endroit de positionnement intermédiaire de la capsule 56, on a une butée escamotable 51, à rotation selon l'axe 54. Le doigt 57 permet la retenue de la capsule. Le dispositif comporte finalement, un élément 52 , solidaire de la partie mobile et qui agit ainsi sur la butée escamotable pour l'ouvrir et la fermer.

Le fonctionnement est le suivait

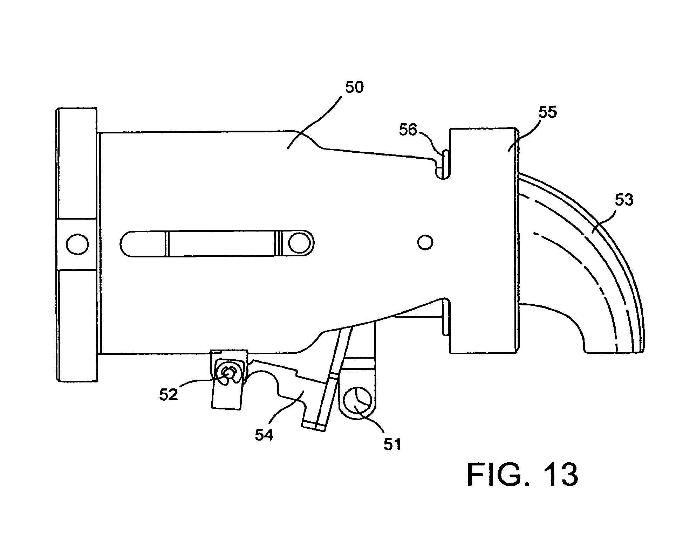

La figure 11 montre lorsque la partie mobile est en mouvement pour s'ouvrir. De sorte que l'élément 52 fait basculer la butée escamotable vers le bas, ce qui libère la capsule. La figure 12 montre la fin de course d'ouverture de la partie mobile, lorsque la butée escamotable est revenue en position de blocage de la capsule 56. Finalement, la figure 13 montre la position de la butée escamotable au moment de l'extraction de ladite capsule 56.

Il est bien entendu que le dispositif selon l'invention fait partie d'une machine à café comprenant tous les éléments permettant l'extraction des capsules, à savoir un réservoir d'eau, une conduite d'amenée d'eau, une pompe pour le déplacement de l'eau, des moyens de chauffage de l'eau et une arrivée d'eau dans la partie mobile.

## Revendications

1. Procédé d'extraction d'une capsule (16) dans un dispositif d'extraction;
la capsule (16) comprenant un bord de guidage sous forme d'une collerette,
le dispositif comprenant:
- une première partie fixe (2);
- une seconde partie (3) mobile relativement à la première partie;
- un logement (4) pour recevoir la capsule et définissant en position de fermeture de la partie mobile contre la partie fixe une position d'extraction de la capsule selon un axe (25) dans ledit logement;
- une partie d'introduction et de positionnement comprenant des moyens de guidage (6, 7) de la capsule arrangés de façon à insérer la capsule par gravité et positionner ladite capsule dans une position intermédiaire, les bords de guidage étant pris en charge dans les moyens de guidage (6, 7), lesdits moyens de guidage étant des glissières d'introduction permettant l'engagement de ladite collerette;
- un système d'écoulement de boisson (19, 53),
ladite seconde partie (3) mobile étant configurée pour déplacer la capsule (16) de la position intermédiaire dans la position d'extraction lors de la fermeture du dispositif,
ledit procédé comprenant: l'introduction par gravitation et le positionnement de la capsule dans ladite position intermédiaire; et la fermeture de ladite second partie afin de déplacer la capsule de la position intermédiaire dans sa position d'extraction,
**caractérisé en ce que**: les moyens de guidage (6, 7) comprennent des moyens d'arrêt (20) retenant la capsule (16) en position intermédiaire, la collerette appuyant contre ces moyens d'arrêt en position intermédiaire; et la seconde partie (3) mobile prend en charge la capsule pour la déplacer de la position intermédiaire à la position d'extraction selon l'axe (25) de la capsule en position d'extraction dans ledit logement (4) de façon à ce que dans son mouvement, la partie mobile agisse sur la capsule pour la descendre et la pousser selon l'axe (25) de ladite partie mobile dans sa position d'extraction.

2. Procédé d'extraction selon la revendication 1, **caractérisé en ce que** la capsule contient du café rôti moulu, du café soluble, du cacao soluble, du lait, du thé, des substances déshydratées pour bouillons ainsi que toutes combinaisons de ces produits.

3. Procédé d'extraction selon le revendication 1 ou 2, **caractérisé en ce que** les moyens d'arrêt retiennent la capsule de manière inclinée par rapport à l'axe (25) de la capsule en position d'extraction dans ledit logement; la capsule basculant légèrement par rapport à l'axe de la capsule en position d'extraction (25).

4. Procédé d'extraction selon l'une quelconque des revendications précédentes, **caractérisé en ce que** les moyens d'arrêt retiennent la capsule de manière inclinée d'un angle faible inférieur à 30 degrés par rapport à l'axe de recentrage (25).

5. Procédé selon l'une quelconque des revendications précédentes, **caractérisé en ce** la capsule est asymétrique par rapport au plan passant par la collerette de manière à pouvoir s'incliner du fait de son centre de gravité décalé par rapport à la collerette.

6. Procédé d'extraction selon la revendication 5, **caractérisé en ce que** la seconde partie (3) mobile force la collerette de la capsule (16) à passer en dessous des moyens d'arrêt (20), en particulier des bossages, lors du passage de la capsule de sa position intermédiaire à sa position d'extraction.

7. Procédé d'extraction selon la revendication 6, **caractérisé en ce que** les bossages retiennent la capsule par appui de la collerette de la capsule sur lesdits bossages.

8. Procédé d'extraction selon l'une quelconque des revendications précédentes, **caractérisé en ce que** les moyens de guidage comprennent des glissières d'introduction.

9. Procédé d'extraction selon l'une quelconque des revendications précédentes, **caractérisé en ce qu'**il comprend une plaque d'extraction (30) vers laquelle la seconde partie (3) mobile déplace la capsule en position d'extraction.

10. Procédé d'extraction selon la revendication 9, **caractérisé en ce que** la capsule a une face destinée à être déchirée sous la montée en pression dans la capsule.

11. Procédé d'extraction selon la revendication 10, **caractérisé en ce que** la plaque d'extraction comprend des pyramides ou des pointes.

12. Procédé d'extraction selon la revendication 9, **caractérisé en ce que** la plaque d'extraction est une plaque percée de trous pour laisser passer le liquide d'extraction et la capsule est en papier filtre.

13. Utilisation d'une capsule (16) comprenant, un bord de guidage sous forme d'une collerette pour :
- un procédé d'extraction selon l'une quelconque des revendications précédentes ; et/ou
- ledit dispositif dudit procédé d'extraction, optionnellement la capsule contenant du café rôti moulu, du café soluble, du cacao soluble, du lait, du thé, des substances déshydratées pour bouillons ainsi que toutes combinaisons de ces produits.

14. Utilisation d'un bord de guidage sous forme d'une collerette d'une capsule (16) pour être pris en charge dans des moyens de guidage (6, 7) et pour appuyer contre des moyens d'arrêt (20) en position intermédiaire dans :
- un procédé d'extraction selon l'une quelconque des revendications 1 à 12 ; et/ou
- le dispositif d'extraction défini dans le procédé d'extraction selon l'une quelconque des revendications 1-12.

15. Utilisation de café rôti moulu, de café soluble, de cacao soluble, de lait, de thé, de substances déshydratées pour bouillons ainsi que toutes combinaisons de ces produits comme contenu d'une capsule (16) comprenant un bord de guidage sous forme d'une collerette, pour un procédé d'extraction selon l'une quelconque des revendications 1 à 12 ou pour le dispositif du procédé d'extraction selon l'une quelconque des revendications 1-12.

16. Utilisation selon la revendication 13, 14 ou 15, **caractérisé en ce que** la capsule est une capsule ouverte, du type capsule en papier filtre, capsule rigide ou semi-rigide de forme cylindrique ou de tronc de cône.

## Claims

1. Method for extracting a capsule (16) in an extraction device;
the capsule (16) comprising a guiding edge in the form of a flange,
the device comprising:
- a first fixed part (2);
- a second part (3) which is mobile relative to the first part;
- a housing (4) to receive the capsule and defining when in a position of closure of the mobile part against the fixed part an extraction position of the capsule about an axis (25) in said housing;
- a part for introduction and positioning of the capsule comprising guiding means (6,7) arranged such as to insert the capsule by gravity and to position said capsule in an intermediate position, the guiding edge being taken charge of in the guiding means (6,7), said guiding means being introduction slides allowing the engagement of said flange;
- a drink pouring system (19,53),
said second mobile part (3) being configured to displace the capsule (16) from the intermediate position into the extraction position when the device is closed,
said method comprising: the insertion by gravity and the positioning of the capsule in the intermediate position; and the closure of said second part in order to displace the capsule from the intermediate position into its extraction position,
**characterized in that**: the guiding means (6,7) comprise stopping means (20) retaining the capsule (16) in the intermediate position, the flange pressing against these stopping means in the intermediate position; and the second mobile part (3) takes over the capsule in order to displace it from the intermediate position to the extraction position about the axis (25) of the capsule in the extraction position in said housing (4) such that in its movement, the mobile part acts on the capsule to bring it down and push it along the axis (25) of the said movable part into its extraction position.

2. Extraction method according to Claim 1, **characterized in that** the capsule contains ground roasted coffee, soluble coffee, soluble cocoa, milk, tea, dehydrated substances for bouillons as well as any combinations thereof.

3. Extraction method according to Claim 1 or 2, **characterized in that** the stopping means retain the capsule in an inclined fashion relative to the axis (25) of the capsule in the extraction position in said housing; the capsule tipping slightly with respect to the axis of the capsule in the extraction position (25).

4. Extraction method according to any one of the preceding claims, **characterized in that** the stopping means retain the capsule in an inclined fashion at a small angle of less than 30 degrees relative to the recentring axis (25).

5. Method according to any of the preceding claims, **characterized in that** the capsule is asymmetrical with respect to the plane passing through the flange in such a way to be able to be tilted due to its centre of gravity being shifted with respect to the flange.

6. Extraction method according to Claim 5, **characterized in that** the second mobile part (3) forces the flange of the capsule (16) to pass beneath the stopping means (20), more particularly bosses, when the capsule passes from its intermediate position to its extraction position.

7. Extraction method according to Claim 6, **characterized in that** the bosses retain the capsule by support of the capsule's flange on said bosses.

8. Extraction method according to any of the preceding claims, **characterized in that** the guiding means comprise introduction slides.

9. Extraction method according to any one of the preceding claims, **characterized in that** it comprises an extraction plate (30) towards which the second mobile part (3) displaces the capsule into the extraction position.

10. Extraction method according to Claim 9, **characterized in that** the capsule has a face intended to be torn under the pressure increase in the capsule.

11. Extraction method according to Claim 10, **characterized in that** the extraction plate comprises pyramids or spikes.

12. Extraction method according to Claim 9, **characterized in that** the extraction plate is a plate tapped with holes to allow the extraction liquid to pass and the capsule is made of filter paper.

13. Use of a capsule (16) comprising a guiding edge in the form of a flange for:
- an extraction method according to any of the preceding claims; and/or
- said device of the said extraction method, optionally the capsule containing ground roasted coffee, soluble coffee, soluble cocoa, milk, tea, dehydrated substances for bouillons as well as any combinations thereof.

14. Use of a guiding edge in the form of a flange of a capsule (16) for being taken charge of in guiding means (6,7) and for being supported by stopping means (20) in the intermediate position in:
- an extraction method according to any of Claims 1 to 12; and/or
- the extraction device defined in the extraction method according to any of Claims 1 to 12.

15. Use of ground roasted coffee, soluble coffee, soluble cocoa, milk, tea, dehydrated substances for soups as well as any combinations thereof as the content of a capsule (16) comprising a guiding edge in the form of a flange for an extraction method according to any of Claims 1 to 12 or for the device of the extraction method according to any of Claims 1 to 12.

16. Use according to Claim 13, 14 or 15, **characterized in that** the capsule is an open capsule of the filter paper capsule type, a rigid or semi-rigid capsule in cylindrical form or truncated-cone form.

## Patentansprüche

1. Verfahren zur Extraktion einer Kapsel (16) in einer Extraktionsvorrichtung;
wobei die Kapsel (16) eine Führungsrand in Form eines Flansches aufweist,
wobei die Vorrichtung Folgendes aufweist:
- ein erstes, feststehendes Teil (2);
- ein zweites Teil (3), das bezüglich des ersten Teils relativ beweglich ist;
- eine Aufnahme (4) zur Aufnahme der Kapsel, wobei die Aufnahme in einer geschlossenen Position des beweglichen Teils gegen das feste Teil eine Extraktionsposition der Kapsel in einer Achse (25) der genannten Aufnahme festlegt;
- ein Teil zur Einführung und Positionierung, das Führungsmittel (6, 7) für die Kapsel aufweist, welche Führungsmittel derart angeordnet sind, dass die Kapsel durch Schwerkraft einführbar ist und die genannte Kapsel in einer Zwischenposition positionierbar ist, wobei der Führungsrand von den Führungsmittel (6,7) aufgenommen wird, wobei die Führungsmittel Führungsschienen sind, die einen Eingriff mit dem genannten Flansch ermöglichen;
- ein Getränkeauslass-System (19, 53),
wobei das zweite, bewegliche Teil (3) derart ausgelegt ist, dass die Kapsel (16) aus der Zwischenposition in die Extraktionsposition während dem Schließen der Vorrichtung schiebbar ist,
wobei das Verfahren Folgendes aufweist: die Einführung durch Schwerkraft sowie die Positionierung der Kapsel in der Zwischenposition; und das Schließen des zweiten Teils, um die Kapsel aus der Zwischenposition in ihre Extraktionsposition zu schieben, **dadurch gekennzeichnet, dass** die Führungsmittel (6, 7) Blockiermittel (20) aufweisen, die dazu ausgelegt sind, die Kapsel (16) in der Zwischenposition zu halten, wobei der Flansch in der Zwischenposition gegen diese Blockiermittel anschlagen; und dass das zweite, bewegliche Teil (3) die Kapsel aufnimmt, um sie längs der Achse (25) der Kapsel in der Extraktionsstellung in der Aufnahme (4) derart aus der Zwischenposition in die Extraktionsposition zu verschieben, dass während der Bewegung das bewegliche Teil auf die Kapsel einwirkt, um sie abzusenken und sie längs der Achse (25) des beweglichen Teils in ihre Extraktionsposition zu schieben.

2. Extraktionsverfahren gemäß Anspruch 1, **dadurch gekennzeichnet, dass** die Kapsel gerösteten, gemahlenen Kaffee, löslichen Kaffee, löslichen Kakao, Milch, Tee, deshydrierte Substanzen für Bouillons sowie sämtliche mögliche Kombinationen dieser Produkte enthält.

3. Extraktionsverfahren gemäß Anspruch 1 oder 2, **dadurch gekennzeichnet, dass** die Blockiermittel die Kapsel in einer verschwenkten Position bezüglich der Achse (25) der Kapsel in der Extraktionsposition in der Aufnahme schräg festhalten, wobei die Kapsel bezüglich der Achse der Kapsel in der Extraktionsstellung (25) leicht verschwenkt ist.

4. Extraktionsverfahren gemäß einem der vorhergehenden Ansprüche, **dadurch gekennzeichnet, dass** die Blockiermittel die Kapsel in einer geschwenkten Position mit einem geringen Winkel von weniger als 30 Grad bezüglich der Ausrichtungsachse (25) halten.

5. Verfahren gemäß einem der vorhergehenden Ansprüche, **dadurch gekennzeichnet, dass** die Kapsel bezüglich der Ebene, die durch den Flansch geht, asymmetrisch ausgestalten ist, so dass sie sich aufgrund ihres bezüglich des Flansches verschobenen Schwerpunktes neigen kann.

6. Extraktionsverfahren gemäß Anspruch 5, **dadurch gekennzeichnet, dass** das zweite, bewegliche Teil (3) den Flansch der Kapsel (16) dazu drängt, sich unter die Blockiermittel (20), insbesondere Vorsprünge, zu bewegen, wenn sich die Kapsel aus ihrer Zwischenposition in ihre Extraktionsposition bewegt.

7. Extraktionsverfahren gemäß Anspruch 6, **dadurch gekennzeichnet, dass** die Vorsprünge die Kapsel **dadurch** halten, dass der Flansch der Kapsel and die genannten Vorsprünge anschlägt.

8. Extraktionsverfahren gemäß einem der vorhergehenden Ansprüche, **dadurch gekennzeichnet, dass** die Führungsmittel Einführungsschienen aufweisen.

9. Extraktionsverfahren gemäß einem der vorhergehenden Ansprüche, **dadurch gekennzeichnet, dass** es eine Extraktionsplatte (30) aufweist, in deren Richtung das zweite, bewegliche Teil (3) die Kapsel in der Extraktionsposition verschiebt.

10. Extraktionsverfahren gemäß Anspruch 9, **dadurch gekennzeichnet, dass** die Kapsel eine Wand aufweist, die dazu vorgesehen ist, bei einem Druckaufbau in der Kapsel zu zerreißen.

11. Extraktionsverfahren gemäß Anspruch 10, **dadurch gekennzeichnet, dass** die Extraktionsplatte Pyramiden oder Spitzen aufweist.

12. Extraktionsverfahren gemäß Anspruch 9, **dadurch gekennzeichnet, dass** die Extraktionsplatte aus einer mit Löchern versehenen Platte besteht, durch welche die Extraktionsflüssigkeit fließen kann, und dass die Kapsel aus einem Filterpapier besteht.

13. Verwendung einer Kapsel (16) mit einem Führungsrand in Form eines Flansches für:
- ein Extraktionsverfahren gemäß einem der vorhergehenden Ansprüche; und/oder
- die Vorrichtung dieses Extraktionsverfahrens,
wobei die Kapsel wahlweise gerösteten, gemahlenen Kaffee, löslichen Kaffee, löslichen Kakao, Milch, Tee, deshydrierte Substanzen für Bouillons sowie sämtliche mögliche Kombinationen dieser Produkte enthält.

14. Verwendung eines Führungsrand in Form eines Flansches einer Kapsel (16) für die Aufnahmen in Führungsmittel (6, 7) und für den Anschlag gegen Blockiermittel (20) in einer Zwischenposition, in:
- einem Extraktionsverfahren gemäß einem der Ansprüche 1 bis 12; und/oder
- der Extraktionsvorrichtung, welche in dem Extraktionsverfahren gemäß einem der Ansprüche 1 bis 12 definiert ist.

15. Verwendung von geröstetem, gemahlenem Kaffee, löslichem Kaffee, löslichem Kakao, Milch, Tee, deshydrierte Substanzen für Bouillons sowie sämtliche mögliche Kombinationen dieser Produkte, als Inhalt einer Kapsel (16), welche ein Führungsrand in Form eines Flansches aufweist, für ein Extraktionsverfahren gemäß einem der Ansprüche 1 bis 12 oder für die Vorrichtung des Extraktionsverfahrens gemäß einem der Ansprüche 1 bis 12 umfasst.

16. Verwendung gemäß Anspruch 13, 14 oder 15, **dadurch gekennzeichnet, dass** die Kapsel eine offene Kapsel, eine Kapsel vom Filterpapiertyp, oder einer steife oder halbsteife Kapsel ist, die zylindrisch oder kegelstumpfförmig ist.
